# EUROPÄISCHE PATENTSCHRIFT

(11) **EP 0 469 280 B1**
(45) Veröffentlichungstag und Bekanntmachung des Hinweises auf die Patenterteilung: **11.05.1994**
(21) Anmeldenummer: 91110212.7
(22) Anmeldetag: 21.06.1991
(51) Int. Cl.: B60T 10/00, B60T 8/00, B60T 13/66

(54) **Verfahren zum Betreiben der Bremsanlage eines Nutzfahrzeugs**
Operating method for a brake system of a commercial vehicle
Méthode pour la mise en oeuvre d'un système de freinage d'un véhicule utilitaire

(30) Priorität: 28.07.1990 DE 4024078
(43) Veröffentlichungstag der Anmeldung: 05.02.1992
(73) Patentinhaber: ROBERT BOSCH GMBH, 70442 Stuttgart (DE)
(72) Erfinder: Wrede, Jürgen, Dipl.-Ing., W-7000 Stuttgart 50 (DE)

(56) Entgegenhaltungen:
- EP-A- 0 288 866
- EP-A- 0 330 149
- EP-A- 0 351 657
- EP-A- 0 386 952
- GB-A- 2 080 458

## Beschreibung

### Stand der Technik

Die Erfindung geht aus von einem Verfahren nach der Gattung des Hauptanspruchs.

Ein solches Verfahren ist aus der EP-A-0 189 082 bekannt. Dieses Verfahren wird zum Vergleichmäßigen der Bremswirkung an den reibungsbehafteten Bremsen eines Fahrzeugs, welches auch mit einem verschleißfreien Retarder ausgestattet ist, sowie zum Schutz der Bremsen vor Überbeanspruchung angewendet. Hierzu werden die Bremswirkung kennzeichnende Temperatursignale der Radbremsen erfaßt und in einem Steuergerät ausgewertet. Bei Überbeanspruchung der reibungsbehafteten Bremsen, was sich durch überhöhte Temperaturen an den Bremsbelägen zeigt, reduziert das Steuergerät an der betroffenen Bremse oder den betroffenen Bremsen das Bremswertgebersignal. Jedoch droht einem Fahrzeug nicht nur Gefahr durch Bremsüberlastung; gefährliche Situationen können auch dadurch auftreten, daß eine Bremse unzureichende Wirkung zeigt. Dies kann dadurch auftreten, daß die Bremsbeläge aufgrund zu geringer Bremsleistung nicht die Temperatur erreichen, oberhalb der das sogenannte Verglasen verhindert ist. Diese Veränderung der Bremsbelagoberfläche, welche zu einer Verringerung des Reibbeiwertes µ führt, tritt verstärkt bei asbestfreien Bremsbelägen auf, die in zunehmendem Maße in Fahrzeugbremsen verwendet werden. Wenn ein Fahrzeug mit einer verschleißfreien Zusatzbremse ausgestattet ist, so wird dies aus wirtschaftlichen Gründen zu einer verringerten Beanspruchung der reibungsbehafteten Betriebsbremse führen, was die Gefahr des Verglasens der Bremsbeläge fördert. Bei einem Fahrzeug mit verglasten Bremsbelägen wird bei einer Notbremsung nur eine verminderte Bremswirkung erzielt.

Aus GB-A-2 080 458 ist ein Regelsystem für eine Fahrzeugbremsanlage mit Strömungs- und Reibungsbremse bekannt. Diesem Regelsystem soll u.a. die Aufgabe zugrundeliegen, das Zusammenwirken von Strömungsbremse und Reibungsbremse zu optimieren. Bei Bremspedalbetätigung wird ein Signal gebildet, das einerseits einer der Strömungsbremse zugeordneten Steuerkette und andererseits einem der Reibungsbremse zugeordneten Regelkreis zugeführt wird. Die Signalzuführung in die zwei Wege erfolgt gleichzeitig, d.h. es erfolgt keine bevorzugte Ansteuerung der Strömungsbremse. Die Strömungsbremse wird aber vorrangig eingesetzt, d.h. zur Wirkung gebracht, und leistet den überwiegenden Teil der Bremsarbeit, während die Reibungsbremse, abgesehen von einer Störung der Strömungsbremse, lediglich ergänzend herangezogen wird. Hierzu sind Maßnahmen getroffen, welche auf die Reibungsbremse einwirken. Eine Einflußnahme auf die Beschaffenheit der Reibbremsbeläge ist dabei nicht angestrebt.

### Vorteile der Erfindung

Das erfindungsgemäße Verfahren mit den kennzeichnenden Merkmalen des Hauptanspruchs hat demgegenüber den Vorteil, daß die Leistungsfähigkeit der Betriebsbremse durch Vermeiden des Verglasens der Bremsbeläge aufrechterhalten bzw. durch "Freibremsen" wieder hergestellt wird, zugleich aber auch die Wirtschaftlichkeit der Bremsanlage erhalten bleibt, weil der Verschleiß der Bremsbeläge durch bevorzugte Ansteuerung der verschleißfreien Zusatzbremse verringert ist.

Durch die in den Unteransprüchen aufgeführten Maßnahmen sind vorteilhafte Weiterentwicklungen und Verbesserungen des im Hauptanspruch angegebenen Verfahrens möglich.

Die im Anspruch 2 angegebene Maßnahme hat den Vorteil, daß bei einer derartigen Bremsung ("Warmbremsen") die Bremsbelagtemperatur eine Höhe erreicht, bei der sich an den Bremsbelägen sogenannte Reibkohle mit einem höheren bzw. für die Auslegung der Bremse zugrundegelegten Reibbeiwert aufbaut.

Mit der im Anspruch 3 erwähnten Maßnahme wird aber eine Überhitzung und ein Verbrennen der Bremsbeläge verhindert.

Im Anspruch 4 sind weitere Parameter angegeben, nach denen das Steuergerät eine bevorzugte Ansteuerung der Betriebsbremse auslösen kann.

### Zeichnung

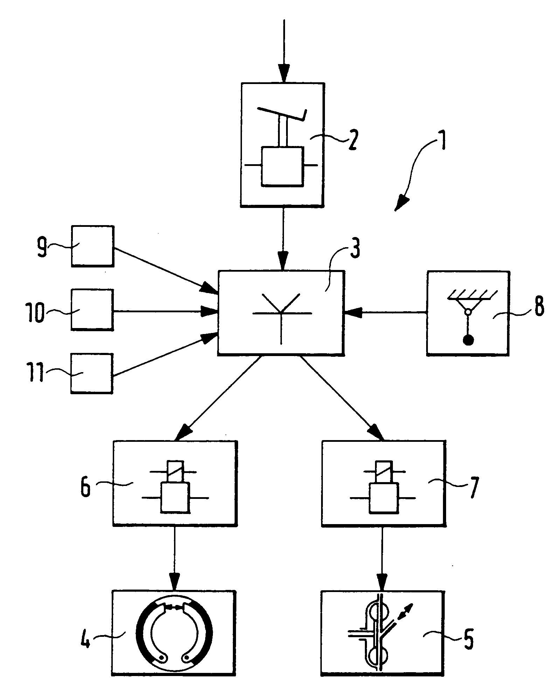

Ein Blockschema einer für die Anwendung des erfindungsgemäßen Verfahrens bestimmten Bremsanlage eines Nutzfahrzeugs ist in der Zeichnung dargestellt.

### Beschreibung des Ausführungsbeispiels

Die in der Zeichnung schematisch dargestellte, elektrisch gesteuerte Bremsanlage 1 eines Nutzfahrzeugs besitzt einen vom Fahrzeugführer betätigbaren Bremswertgeber 2, mit dem ein Bremswert vorgebbar ist. Dieser kann ein Fahrzeugverzögerungs-Sollwert sein. Der Bremswert wird auf ein elektronisches Steuergerät 3 der Bremsanlage 1 übertragen und nach einem im Steuergerät gespeicherten Regelalgorithmus ausgewertet. Das Steuergerät 3 wählt nach Maßgabe des Bremswertgebersignals eine Bremse oder mehrere Bremsen des Fahrzeugs aus, um die gewünschte Verzögerung zu erzielen. Das Fahrzeug hat eine reibungsbehaftete Betriebsbremse 4, welche Trommelbremsen und/oder Scheibenbremsen aufweist. Außerdem ist das Fahrzeug mit einer verschleißfreien Zusatzbremse 5 ausgestattet. Diese kann eine Flüssigkeitsbremse (hydrodynamischer Retarder), eine Wirbelstrombremse (elektrodynamischer Retarder) oder eine Motorbremse sein. Der jeweiligen Bremse ist eine Ansteuereinheit 6, 7 vorgeschaltet, mit welcher das erforderliche Betätigungsmedium (Druckluft, elektrische Energie, Hydrauliköl) steuerbar ist. Ferner besitzt die Bremsanlage 1 einen Sensor 8 für die Erfassung der Bremswirkung, z. B. des Verzögerungs-Istwertes. Das die Bremswirkung kennzeichnende Signal wird dem Steuergerät 3 zugeleitet und von diesem ausgewertet. Schließlich sind mehrere Signalgeber 9, 10, 11 vorgesehen, mit denen z. B. die Anzahl der von der Betriebsbremse 4 ausgeführten Bremsungen, deren Dauer, der Bremsdruck bei hydraulischen oder pneumatischen Trommel- oder Scheibenbremsen, die seit der vorangegangenen Betätigung der Betriebsbremse gefahrene Strecke und die Fahrzeuggeschwindigkeit bei Beginn der Betätigung der Betriebsbremse erfaßt und entsprechende Signale an das Steuergerät 3 gegeben werden.

Bei einer vom Fahrzeugführer ausgelösten Bremsung steuert das Steuergerät 3 bevorzugt die verschleißfreie Zusatzbremse 5 an. In Abhängigkeit von der Höhe des Pegels des vom Bremswertgeber 2 abgegebenen Signals, d. h. bei hohem Verzögerungs-Sollwert, schaltet das Steuergerät 3 zusätzlich die reibungsbehaftete Betriebsbremse 4 hinzu, um die verlangte Bremswirkung zu erzielen. Die mit der Betriebsbremse 4 ausgeführten Bremsungen werden im Steuergerät 3 aufgrund der Signale des Verzögerungssensors 8 und der übrigen Signalgeber 9, 10, 11 gezählt, ihre Dauer, Wirkung usw. erfaßt, um die Intensität der Betriebsbremsbetätigung zu ermitteln. Wenn das Steuergerät 3 aus diesen Daten ein drohendes oder bereits eingetretenes Verglasen der Betriebsbremsbeläge erkennt, löst es bei einer folgenden Bremsanforderung oder bei mehreren folgenden Bremsanforderungen mit hohem Signalpegel des Bremswertgebersignals ausschließlich eine Bremsung mit der Betriebsbremse 4 aus, um durch ausreichendes "Warmbremsen", d. h. Bremsen mit ausreichendem Anstieg der Bremsbelagstemperatur, die Verglasungsgefahr oder das Verglasen zu beseitigen. Der Auslösepunkt für eine solche Bremsung kann durch Versuche ermittelt und dem Regelalgorithmus des Steuergerätes 3 zugrundegelegt sein. Erkennt das Steuergerät 3 bei einer derartigen Bremsung jedoch die Gefahr des Überhitzens der Bremsbeläge der Betriebsbremse 4, so steuert es zusätzlich oder ausschließlich die Zusatzbremse 5 an.

Die vorbeschriebene Arbeitsweise der Bremsanlage kann bevorzugt Anwendung finden an Straßenfahrzeugen, wie z. B. Zugfahrzeugen, Anhängern oder aus Zugfahrzeug und Anhänger gebildeten Kraftwagenzügen.

## Patentansprüche

1. Verfahren zum Betreiben der Bremsanlage (1) eines Nutzfahrzeuges mit einer reibungsbehafteten Betriebsbremse (4) und einer vorrangig eingesetzten verschleißfreien Zusatzbremse (5), mit einem vom Fahrzeugführer betätigbaren Bremswertgeber (2), mit dem ein Bremswert vorgebbar ist, sowie mit einem Steuergerät (3), welches nach Maßgabe des Bremswertgebersignals die Bremsen (4, 5) ansteuert, die Bremswirkung kennzeichnende Signale erfaßt und auswertet, dadurch gekennzeichnet, daß das Steuergerät (3) in einem ersten Betriebsmodus bei Bremsanforderung bevorzugt die Zusatzbremse (5) ansteuert, bei hohem Signalpegel des Bremswertgebersignals zusätzlich die Betriebsbremse (4) zuschaltet, die Zahl der Bremsungen der Betriebsbremse (4) und deren Intensität erfaßt und in Abhängigkeit von diesen Daten in einen zweiten Betriebsmodus geschaltet wird, bei dem ausschließlich die Betriebsbremse (4) angesteuert wird.

2. Verfahren nach Anspruch 1, dadurch gekennzeichnet, daß das Steuergerät (3) im zweiten Betriebsmodus nur bei einem hohen Signalpegel des Bremswertgebersignals die Betriebsbremse (4) ansteuert.

3. Verfahren nach Anspruch 1 oder 2, dadurch gekennzeichnet, daß das Steuergerät (3) bei einer drohenden Überlastung der Betriebsbremse (4) zusätzlich oder ausschließlich die Zusatzbremse (5) ansteuert.

4. Verfahren nach Anspruch 1, dadurch gekennzeichnet, daß das Steuergerät (3) außerdem das Bremswertgebersignal und/oder den die Betriebsbremse (4) beaufschlagenden Bremsdruck und/oder die Fahrtkilometer seit der letzten Betriebsbremsansteuerung und/oder die Fahrzeuggeschwindigkeit bei Bremsbeginn erfaßt und auswertet.

## Claims

1. Method for operating the brake system (1) of a utility vehicle having a service brake (4) which is subject to friction and a wear-free supplementary brake (5) which is used with priority, having a brake value generator (2) which can be actuated by the vehicle driver and with which a brake value can be prespecified and having a control device (3) which actuates the brakes (4, 5) in accordance with the signal of the brake value generator, detects and evaluates signals which characterize the braking effect, characterized in that, in a first operating mode, the control device (3) preferably actuates the supplementary brake (5) when braking is required, additionally activates the service brake (4) in the care of a high signal level of the signal of the brake value generator, detects the number of braking operations of the service brake (4) and their intensity and as a function of these data is switched into a second operating mode in which only the service brake (4) is actuated.

2. Method according to Claim 1, characterized in that, in the second operating mode, the control device (3) exclusively actuates the service brake (4) in the case of a high signal level of the signal of the brake value generator.

3. Method according to Claim 1 or 2, characterized in that, in the event of a threatened overload of the service brake (4), the control device (3) additionally or exclusively actuates the supplementary brake (5).

4. Method according to Claim 1, characterized in that the control device (3) also detects and evaluates the signal of the brake value generator and/or the brake pressure fed to the service brake (4) and/or the kilometres travelled since the last actuation of the service brake and/or the speed of the vehicle at the start of braking.

## Revendications

1. Procédé pour l'exploitation de l'installation de freinage (1) d'un véhicule utilitaire avec un frein de service à friction (4) et un frein supplémentaire (5) sans friction mis en oeuvre de façon prioritaire, avec un émetteur de valeur de freinage (2) susceptible d'être actionné par le conducteur du véhicule, et grâce auquel une valeur de freinage est susceptible d'être prédéfinie, ainsi qu'avec un appareil de commande (3) qui, d'après le signal de l'émetteur de valeur de freinage, commande les freins (4, 5), détecte les signaux caractérisant l'action de freinage et les exploite, procédé caractérisé en ce que l'appareil de commande (3) dans un premier mode de fonctionnement, commande lors d'une demande de freinage, de préférence le frein supplémentaire (5), dans le cas d'un niveau élevé du signal de l'émetteur de valeur de freinage, branche en supplément le frein de service (4), détecte le nombre des freinages du frein de service (4) et leur intensité, et en fonction de ces données, il est commuté sur un second mode de fonctionnement dans lequel est exclusivement commandé le frein de service (4).

2. Procédé selon la revendication 1, caractérisé en ce que l'appareil de commande (3) ne commande le frein de service (4) dans le second mode de fonctionnement que dans le cas d'un niveau élevé du signal de l'émetteur de valeur de freinage.

3. Procédé selon la revendication 1 ou la revendication 2, caractérisé en ce que l'appareil de commande (3) commande, en outre, ou bien exclusivement, le frein supplémentaire (5) dans le cas d'une surcharge menaçante du frein de service (4).

4. Procédé selon la revendication 1, caractérisé en ce qu'en outre l'appareil de commande (3) détecte et exploite le signal de l'émetteur de valeur de freinage et/ou la pression de freinage alimentant le frein de service (4) et/ou les kilomètres parcourus depuis la dernière commande du frein de service et/ou la vitesse du véhicule au début du freinage.
